# EUROPÄISCHE PATENTSCHRIFT

(11) **EP 0 448 675 B1**
(45) Veröffentlichungstag und Bekanntmachung des Hinweises auf die Patenterteilung: **29.12.1993**
(21) Anmeldenummer: 90915120.1
(22) Anmeldetag: 15.10.1990
(51) Int. Cl.: F16H 61/46, F03C 1/06

(54) **HYDRAULISCHE SCHALTUNG ZUR BEGRENZUNG DES DREHMOMENTS EINES IM GESCHLOSSENEN KREISLAUF MIT EINER HYDROPUMPE VERBUNDENEN HYDROSTATISCHEN HYDROMOTORS**
HYDRAULIC CIRCUIT FOR LIMITING THE TORQUE OF A HYDROSTATIC HYDRAULIC MOTOR CONNECTED IN CLOSED CIRCUIT TO A HYDRAULIC PUMP
CIRCUIT HYDRAULIQUE POUR LIMITER LE COUPLE D'UN MOTEUR HYDRAULIQUE HYDROSTATIQUE RELIE EN CIRCUIT FERME A UNE POMPE HYDRAULIQUE

(30) Priorität: 17.10.1989 DE 3934641
(43) Veröffentlichungstag der Anmeldung: 02.10.1991
(73) Patentinhaber: Liebherr-Werk Bischofshofen GmbH, 5500 Bischofshofen (AT)
(72) Erfinder: SCHRÖDER, Klaus, D-7951 Kirchdorf/Iller (DE)
(74) Vertreter: Lorenz, Eduard
(86) Internationale Anmeldenummer: EP9001746
(87) Internationale Veröffentlichungsnummer: WO9105966

(56) Entgegenhaltungen:
- EP-A- 0 301 896
- US-A- 4 174 614

## Beschreibung

Die Erfindung betrifft eine hydraulische Schaltung zur Begrenzung des Drehmoments eines im geschlossenen Kreislauf mit einer Hydropumpe verbundenen hydrostatischen Hydromotors nach dem Oberbegriff des Patentanspruchs 1.

Bei einer derartigen, beispielsweise aus "ÖlhydrauliK", G. Bauer, 3. Auflage 1982, B.G. Teubner Stuttgart, Seiten 233-235, bekannten Schaltung eines hydrostatischen Getriebes mit geschlossenem Kreislauf sind Druckbegrenzungsventile vorgesehen, die beim Überschreiten eines bestimmten Druckes eine Bypass-Verbindung ermöglichen und somit eine Begrenzung des Drehmoments des Hydromotors bewirken. Die maximale Begrenzung des Drehmoments eines Hydraulikmotors ist beispielsweise erforderlich, wenn dem Hydromotor ein Getriebe nachgeschaltet ist. Dieses Getriebe kann beispielsweise dem Antrieb der Räder eines Fahrzeugs dienen.

Dient nun der Hydromotor nur dazu, ein Fahrzeug oder ein anderes Gerät nur mit einer Drehrichtung anzutreiben, läßt sich das von dem Motor in der Beschleunigungsphase abgegebene und auf das Getriebe übertragene Drehmoment in einfacher Weise durch entsprechende Auslegung des Druckbegrenzungsventils auf das höchstzulässige Drehmoment begrenzen. Eine solche Begrenzung ist auch dann problemlos möglich, wenn der Hydromotor mit beiden Drehrichtungen betrieben werden kann und in beiden Drehrichtungen Leistung abgibt. In diesem Falle sind sowohl die Druckleitung als auch die Rückführleitung, die je nach Drehrichtung ihre Funktionen wechseln, durch Überdruckventile abzusichern.

Nun arbeiten hydrostatische Hydromotore nicht nur als Antriebselemente, sondern häufig übernehmen sie auch die Funktion von Motorbremsen, wenn von der Abtriebsseite über das Getriebe auf den Motor ein Drehmoment übertragen wird, also beispielsweise wenn die dem Hydromotor zugeführte Menge an Hydrauliköl einer Drehzahl des Motors entspricht, die geringer ist als die über das Getriebe dem Motor erteilte Drehzahl, so daß der Hydromotor als Motorbremse im Pumpenbetrieb arbeitet. Wird der Hydromotor jedoch im Bremsbetrieb als Pumpe betrieben, wird die Rückführleitung die Druckleitung, in der sich aufgrund der Absicherung durch das Druckbegrenzungsventil ein Druck aufbauen kann, der dem Druck in der Zuführungsleitung in der Beschleunigungsphase mit größtmöglichem Drehmoment entspricht. Da der Hydromotor entsprechend seinem hydraulischen Wirkungsgrad sowohl bei Betrieb als Motor als auch bei Betrieb als Pumpe Verluste hat, ist das Drehmoment bei Pumpenbetrieb an der Motorwelle sehr viel größer als beim Motorbetrieb, wenn der Druck in der Rückführleitung genauso hoch ist wie bei Motorbetrieb in der Speiseleitung. Wird also der Druck in der Rückführleitung bei Pumpenbetrieb durch das Überdruckventil auf den gleichen Höchstdruck wie bei Motorbetrieb begrenzt, wird aufgrund des höheren Drehmoments beispielsweise das Getriebe überlastet. Um eine solche Überlastung des Getriebes ohne dessen Beschädigung zu ermöglichen, wird dieses üblicherweise überdimensioniert, und zwar beispielsweise etwa um 50 bis 70 Prozent. Diese Überdimensionierung der Antriebsteile führt jedoch zu einer Verteuerung der Fahrzeuge oder Geräte.

Aufgabe der Erfindung ist es daher, eine hydraulische Schaltung der eingangs angegebenen Art zu schaffen, die das höchste Drehmoment an der Welle des Hydromotors auf etwa gleiche Werte unabhängig davon begrenzt, ob der Hydromotor im Motorbetrieb oder im Pumpenbetrieb betrieben wird.

Erfindungsgemäß wird diese Aufgabe bei einer hydraulischen Schaltung der gattungsgemäßen Art dadurch gelöst, daß die Druckbegrenzungsventile auf vorgesteuerten Druckbegrenzungsventilen bestehen und daß Schaltventile vorgesehen sind, die bei Motorbetrieb des Hydromotors das vorgesteuerte Druckbegrenzungsventil der Druckseite auf einen höheren Höchstdruck und bei Pumpenbetrieb das vorgesteuerte Druckbegrenzungsventil der anderen Druckseite auf einen niedrigeren Höchstdruck schalten. Dabei wird der jeweils durch das vorgesteuerte Druckbegrenzungsventil einstellbare Höchstdruck und der niedrigere Druck so bemessen, daß sich sowohl bei Motorbetrieb des Hydromotors als auch bei dessen Bremsbetrieb, bei dem dieser als Pumpe arbeitet, an der Motorwelle ein etwa gleich großer Drehmoment ergibt.

Ein lastabhängiges Überströmventil zum Schutz eines Motors ist beispielsweise aus der DE-AS 14 53 426 bekannt.

Die erfindungsgemäße hydraulische Schaltung ermöglicht es somit, den Motor im Motorbetrieb mit beiden Drehrichtungen zu betreiben und dennoch den Motor in beiden Drehrichtungen im Pumpenbetrieb als Motorbremse zu verwenden, ohne daß im Bremsbetrieb an der Motorwelle ein unzulässig hohes Drehmoment entsteht. Die beiden Druckstufen des vorgesteuerten Druckbegrenzungsventils sind entsprechend dem Wirkungsgrad des Hydromotos zu wählen, so daß die Drücke in den Druckleitungen bei Motorbetrieb und bei Pumpenbetrieb so aufeinander abgestuft sind, daß sich bei beiden Betriebsarten an der Motorwelle ein etwa gleich großes Drehmoment einstellt.

In weiterer Ausgestaltung der Erfindung ist vorgesehen, daß zur Steuerung der vorgesteuerten Druckbegrenzungsventile eine Servo-Hydropumpe vorgesehen ist, deren Druckseite durch ein Wegeventil auf eines der vorgesteuerten Druckbegrenzungsventile schaltbar ist. Das Wegeventil wird so geschaltet, daß das bei Motorbetrieb der speisenden Druckleitung zugeordnete vorgesteuerte Druckbegrenzungsventil mit dem Druck der Servo-Hydropumpe beaufschlagt ist, so daß dieses vorgesteuerte Druckbegrenzungsventil auf den größeren Höchstdruck geschaltet ist. Umgekehrt ist das in der Rücklaufleitung angeordnete vorgesteuerte Druckbegrenzungsventil auf den geringeren Druck geschaltet, weil dessen Steuerleitung entlüftet ist, so daß sich bei Bremsbetrieb in dieser Rücklaufleitung nur ein geringerer Höchstdruck aufbauen kann, der das Drehmoment der von der Getriebeseite her angetriebenen Motorwelle auf den gleichen Wert begrenzt wie bei Motorbetrieb.

Zweckmäßigerweise ist das Wegeventil ein elektromagnetisch betätigbares Vier/Zweiwegeventil mit zusätzlicher Schwimmstellung.

In weiterer Ausgestaltung der Erfindung ist vorgesehen, daß die Servo-Hydropumpe zusätzlich ein Verstellelement für die Hydropumpe steuert. Damit verstellt die Servo-Hydropumpe bei Motorbetrieb die Leistung der Hydropumpe auf den erforderlichen Wert und verringert diese im Bremsbetrieb entsprechend.

Nach einer erfinderischen Weiterbildung ist vorgesehen, daß ein auf Durchfluß- oder Drosselstellung schaltbares Drosselventil in jeder Vorsteuerleitung der vorgesteuerten Druckbegrenzungsventile vorgesehen ist, daß bei Druckanstieg in der Druckleitung das Drosselventil auf Drosselstellung schaltet, so daß das der jeweiligen Druckleitung zugeordnete Druckbegrenzungsventil mit vorbestimmter Zeitverzögerung auf die höhere Druckstufe geschaltet wird. Diese Ausgestaltung stellt sicher, daß keine Überlastung des Getriebes beispielsweise eines Fahrzeugs eintreten kann, wenn der Hydromotor zu einer Zeit, in der er noch im Bremsbetrieb arbeitet, auf eine entgegengesetzte Drehrichtung, beispielsweise auf Rückwärtsfahrt, umgeschaltet wird.

Nach einer weiteren erfinderischen Ausgestaltung ist vorgesehen, daß in den Vorsteuerleitungen der vorgesteuerten Druckbegrenzungsventile Wegeventile mit Durchfluß- und Sperrstellung angeordnet sind, die durch Fühler schaltbar sind, die die Förderrichtung der Hydropumpe, den Druck in den Speise- und Rückflußleitungen des Hydromotors oder die Drehrichtung des Hydromotors erfassen.

Ausführungsbeispiele der Erfindung werden nachstehend anhand der Zeichnung näher erläutert. In dieser zeigt:
- Fig. 1: ein schematisches Schaltbild der hydraulischen Schaltung zur Begrenzung des Drehmoments eines hydrostatischen Hydromotors in einer Stellung, in der der Hydromotor in beiden Drehrichtungen in einem Bremsbetrieb als Pumpe arbeiten kann,
- Fig. 2: die Schaltung nach Fig. 1, in der das Drehmoment an der Welle des Hydromotors bei Motorbetrieb und Bremsbetrieb in einer Drehrichtung auf etwa gleiche Größe begrenzt ist,
- Fig. 3: eine andere Ausführungsform der Schaltung nach Fig. 1, bei der bei Druckanstieg in der Speise- oder Rückführleitung ein Drosselventil in die zugehörige Vorsteuerleitung des vorgesteuerten Druckbegrenzungsventils eingeschaltet wird, und
- Fig. 4: eine dritte Ausführungsform eines Schaltbildes, bei der die Vorsteuerleitungen der vorgesteuerten Druckbegrenzungsventile durch Schaltventile sperrbar sind.

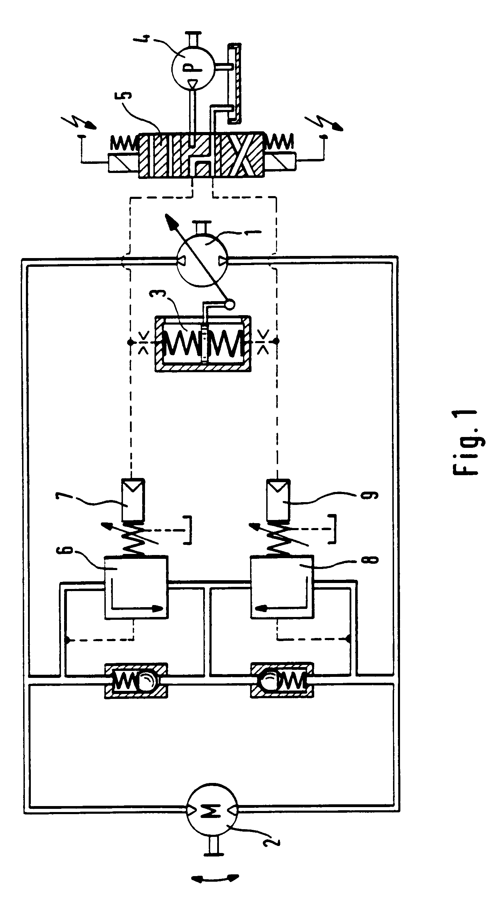

Das Hydrauliksystem nach dem Schaltbild gemäß Fig. 1 enthält eine mit einem reversierbaren Antrieb versehene Hydropumpe 1 und einen Hydromotor 2. Beide bilden einen hydrostatischen Antrieb. Aufgrund der Reversierbarkeit der Hydropumpe 1 kann der Hydromotor 2 vom Stillstand bis zu einer Maximaldrehzahl wechselweise in beiden Richtungen in Bewegung gesetzt werden, wobei zur Steuerung der Fördermenge ein Stellhebel vorgesehen ist.

Die Hydraulikpumpe 1 wird von einem Regelelement 3 verstellt. Der dazu erforderliche hydraulische Druck wird von einer Speisepumpe 4 erzeugt. Ein Dreistellungsventil 5 ermöglicht die Schaltung der Pumpe 1 in den Schaltzuständen "0 Fördermenge", Förderung in die eine Richtung und Förderung in die andere Richtung.

Zum Schutz der Pumpe 1 und des Hydraulikmotors 2 sind Druckbegrenzungsventile 6 und 8 im Hydraulikkreislauf eingebaut. Zuschaltventile 7 und 9 ermöglichen den Betrieb der Druckbegrenzungsventile 6 und 8 in 2 Druckstufen.

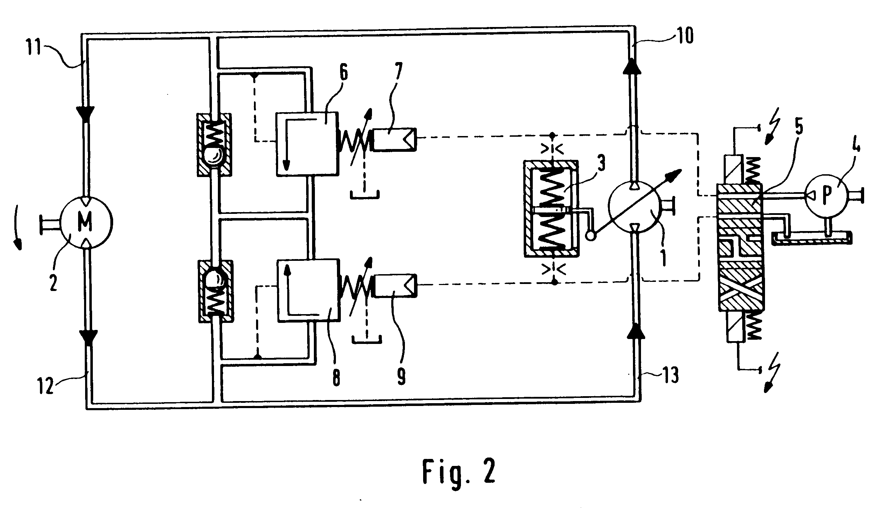

Fig. 2 zeigt den Schaltzustand, bei dem die Pumpe 1 Hydrauliköl über die Leitungen 10 und 11 zum Hydraulikmotor 2 fördert. Bei Verwendung dieses Antriebs in beispielsweise einem Fahrzeug entsteht in den Leitungen 10 und 11 beim starken Beschleunigen ein hoher Druck. Der hohe Druck bewirkt ein hohes Drehmoment am Ölmotor 2 und eine Drehrichtung, die hier beispielsweise entgegen dem Uhrzeigersinn angezeigt wird. Vom Ölmotor fließt Hydrauliköl mit geringem Druck über die Leitungen 12 und 13 zurück zur Pumpe 1. Nicht dargestellt ist in dieser Skizze ein Speisekreislauf, der Leckölverluste im System ausgleicht.

In Fig. 2 fördert die Servopumpe 4 über das Steuerventil 5 Steueröl zum Verstellelement 3 der Hydraulikpumpe 1. Gleichzeitig wird jedoch das Druckzuschaltventil 7 mit demselben Steuerdruck beaufschlagt. Durch die Druckzuschaltung des Ventils 7 auf das Druckbegrenzungsventil 6 hat dieses den höheren von 2 Einstellwerten. Dieser Einstellwert begrenzt das maximale Ausgangsdrehmoment am Ölmotor 2.

Zur Verzögerung der Drehbewegung des Ölmotors 2 und damit eines beispielsweise angetriebenen Fahrzeugs kann z.B. das Schaltventil 5 in seine Mittelstellung gemäß Fig. 1 geschaltet werden. In dieser Situation fördert der Ölmotor 2, der jetzt vom Fahrzeug angetrieben wird, als Pumpe Hydrauliköl über die Leitungen 12 und 13 zur Pumpe 1. Der durch das Druckbegrenzungsventil 6 durch Zuschalten des Ventils 7 erzielte Höchstbetriebsdruck hat das maximale Moment des Ölmotors 2 bestimmt. Jetzt wird ein Moment zum Antrieb des Ölmotors benötigt, wodurch das Fahrzeug verzögert wird. Da zur Bemessung des Getriebes möglichst das gleich große Drehmoment am Ölmotor auch in der Verzögerungsphase gegeben sein soll, darf der in den Leitungen 12 und 13 entstehende hydraulische Druck nicht so hoch werden, wie in den Leitungen 10 und 11 beim Beschleunigen des Fahrzeugs. Dies erklärt sich aus dem hydraulisch-mechanischen Wirkungsgrad des Ölmotors, der sowohl Verluste hat wenn er als Motor betrieben wird als auch dann wenn er als Pumpe betrieben wird.

Diese Verluste multiplizieren sich. Beispielsweise kann bei einem hydraulischen Druck in den Leitungen 10 und 11 zum Betrieb des Ölmotors 2 von 450 bar ein maximales Drehmoment von 650 Nm durch den Ölmotor erzeugt werden. Beim Antrieb des Ölmotors mit 650 Nm Drehmoment kann der hydraulische Druck in den Leitungen 12 und 13 jedoch nur 290 bar erreichen.

Zum Schutz des dem Ölmotor nachgeschalteten Getriebes ist es deshalb erforderlich, daß das Druckbegrenzungsventil 8 in seiner niedrigeren Druckstufe das maximale Moment am Ölmotor so begrenzt, daß der jetzt von den Rädern und dem Getriebe angetriebene Ölmotor kein höheres Drehmoment aufnimmt als das Getriebe zuläßt. Dies wird dadurch sichergestellt, daß das Druckzuschaltventil 9 sowohl in der Schaltstellung gemäß Fig. 1 als auch in der Schaltstellung gemäß Fig. 2 drucklos zum Tank entlastet ist und somit das Druckbegrenzungsventil 8 nur die niedrigere Druckstufe hat. Nach Verzögerung des Fahrzeugs bis zum Stillstand kann durch Umschalten des Steuerventils 5 in seine untere Schaltstellung der Hydromotor in der Gegenrichtung beschleunigt werden, wobei sich die Funktion der Ventile 6 und 8 sowie 7 und 9 umkehrt. Die Wirkung ist auch in dieser Fahrtrichtung dieselbe.

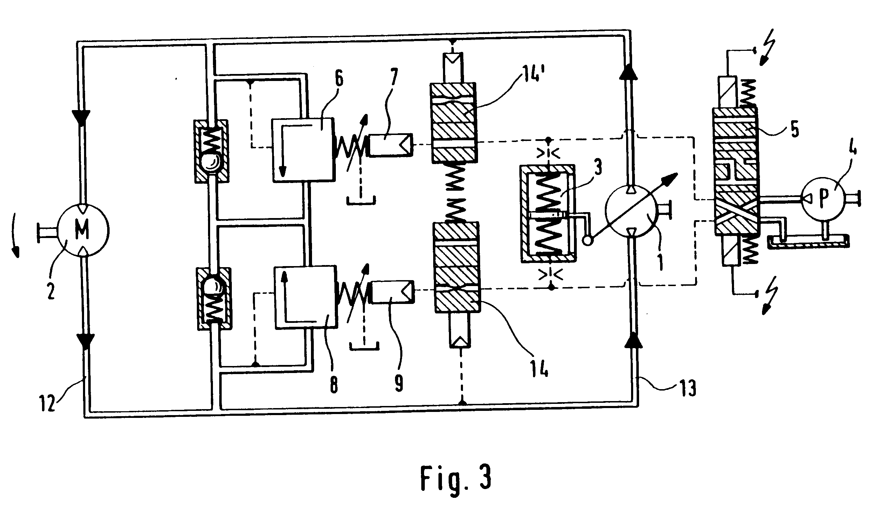

In einer weiteren Ausgestaltung der Erfindung gemäß Fig. 3 soll eine Absicherung gegen Fehlbedienung durch den Fahrer vorgenommen werden. In Fig. 3 ist dargestellt, daß die Förderrichtung der Pumpe und des Ölmotors sowie die Drehrichtung des Ölmotors diegleiche wie in Fig. 2 ist. Das Schaltventil 5 ist jedoch schon auf Gegenrichtung geschaltet, weil der Fahrer des Fahrzeugs beispielsweise auf Rückwärtsfahrt geschaltet hat. In dieser Phase würde in den Leitungen 12 und 13 ein zu hoher Druck entstehen, da durch Umschaltung des Schaltventils 5 auf Rückwärtsfahrt das Druckzuschaltventil 9 bereits Steuerdruck erhält, obwohl der Ölmotor 2 durch Verzögerung des Fahrzeugs bei Vorwärtsfahrtrichtung den hydraulischen Druck in den Leitungen 12 und 13 erzeugt. Wie bereits ausgesagt, soll jedoch dieser Druck den Maximalwert des eingestellten niedrigeren Drucks zum Druckbegrenzungsventil 8 nicht überschreiten. In Fig. 3 ist dargestellt, daß ein Ventil 14 durch den Hochdruck in den Leitungen 12 und 13 in eine gedrosselte Durchgangsstellung geschaltet wurde. Dadurch kann der von der Servopumpe 4 erzeugte Servodruck das Druckzuschaltventil 9 nur zeitlich verzögert betätigen. Die Schaltung ermöglicht durch richtige Bemessung der Drossel in Ventil 14 eine Abbremsung des Fahrzeugs ohne Überlastung des dem Ölmotor 2 nachgeschalteten Getriebes. Das Ventil 14' hat diegleiche Funktion in Gegenfahrtrichtung.

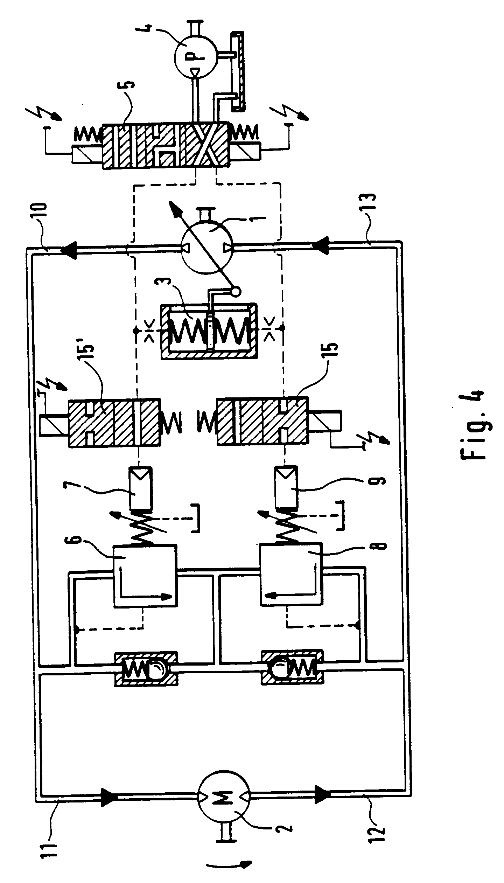

Fig. 4 zeigt eine Schaltung, die den Schutz des dem Ölmotor nachgeschalteten Getriebes bei gewollter oder ungewollter Umschaltung des Schaltventils auch über einen längeren Zeitraum sicherstellen soll. Ein Stellungssensor am Pumpenregler 3 der Pumpe 1 öffnet das Sperrventil 15 bzw. 15' erst dann, wenn die Förderrichtung der Pumpe mit der am Schaltventil 5 gewählten Schaltrichtung übereinstimmt. Erst dann treibt die Pumpe 2 den Ölmotor an, und es darf das Druckbegrenzungsventil 8 über das Zuschaltventil 9 in die höhere Druckstufe gestellt werden. Der Sensor an der Verstelleinrichtung der Pumpe 1 kann auch durch einen Förderrichtungssensor in den Leitungen 10, 11, 12 oder 13 ersetzt werden. Eine weitere Möglichkeit für die Drehrichtungskontrolle besteht durch Verwendung eines Drehrichtungssensors am Ölmotor 2. Da die Drehrichtung des Ölmotors 2 die Fahrtrichtung eines beispielsweise verwendeten Fahrzeugs bestimmt, läßt sich durch die Stellung des Schaltventils 5 genau bestimmen, ob eine Beschleunigung oder Verzögerung des Fahrzeugs vorliegt.

Beschleunigung des Fahrzeugs bedeutet hohe Druckstufe der Druckbegrenzungsventile 6 und 8. Verzögerung des Fahrzeugs bedeutet niedrigere Druckstufe an den Druckbegrenzungsventilen 6 und 8.

Durch die Verwendung dieser Sicherheitsschaltung lassen sich erhebliche Kosten für die Entwicklung der Getriebe und nachgeschalteter Antriebseinheiten einsparen, da die bisher notwendige Überdimensionierung dieser Antriebsstelle im Bereich von 50 bis 70 Prozent lag. Der angenommene Wirkungsgrad für den Ölmotor beträgt dabei ca. 80 Prozent.

## Patentansprüche

1. Hydraulische Schaltung zur Begrenzung des Drehmoments eines im geschlossenen Kreislauf mit einer Hydropumpe verbundenen hydrostatischen Hydromotors, der im Bremsbetrieb als Hydropumpe arbeitet, mit dem Hydromotor vor- und nachgeschalteten Druckbegrenzungsventilen,
**dadurch gekennzeichnet,**
daß die Druckbegrenzungsventile aus vorgesteuerten Druckbegrenzungsventilen (6,7; 8,9) bestehen und daß mindestens ein Schaltventil (5) vorgesehen ist, das bei Motorbetrieb des Hydromotors (2) das vorgesteuerte Druckbegrenzungsventil der Druckseite auf einen höheren Höchstdruck und bei Pumpenbetrieb das vorgesteuerte Druckbegrenzungsventil der anderen Druckseite auf einen niedrigeren Höchstdruck schaltet.

2. Schaltung nach Anspruch 1, dadurch gekennzeichnet, daß zur Steuerung der vorgesteuerten Druckbegrenzungsventile (6-9) eine Servo-Hydropumpe (4) vorgesehen ist, deren Druckseite durch ein Wegeventil (5) auf eines der vorgesteuerten Druckbegrenzungsventile schaltbar ist.

3. Schaltung nach Anspruch 2, dadurch gekennzeichnet, daß das Wegeventil ein elektromagnetisch betätigbares Vier/Zweiwegeventil mit zusätzlicher Schwimmstellung ist.

4. Schaltung nach einem der Ansprüche 1 bis 3, dadurch gekennzeichnet, daß die Servo-Hydropumpe (4) zusätzlich ein Verstellelement (3) für die Hydropumpe (1) steuert.

5. Schaltung nach einem der Ansprüche 1 bis 4, dadurch gekennzeichnet, daß ein auf Durchfluß- oder Drosselstellung schaltbares Drosselventil (14, 14') in jeder der Vorsteuerleitungen der vorgesteuerten Druckbegrenzungsventile (6-9) vorgesehen ist, daß bei Druckanstieg in der Druckleitung (11-13) das Drosselventil auf Drosselstellung schaltet, so daß das der jeweiligen Druckleitung zugeordnete vorgesteuerte Druckbegrenzungsventil mit vorbestimmter Zeitverzögerung auf die höhere Druckstufe geschaltet wird.

6. Schaltung nach einem der Ansprüche 1 bis 4, dadurch gekennzeichnet, daß in den Vorsteuerleitungen der vorgesteuerten Druckbegrenzungsventile (6-9) Wegeventile mit Durchfluß- oder Sperrstellung angeordnet sind, die durch Fühler schaltbar sind, die die Förderrichtung der Hydropumpe (1) den Druck in den Speise- und Rückflußleitungen (10-13) des Hydromotors (2) oder die Drehrichtung des Hydromotors erfassen.

## Claims

1. Hydraulic circuit for limiting the torque of a hydrostatic hydraulic motor connected in closed circuit to a hydraulic pump, which hydrostatic motor operates as a hydraulic pump in the regenerative braking mode, with pressure relief valves arranged upstream and downstream of said hydrostatic motor,
**characterised in that**
the pressure relief valves consist of pilot controlled pressure relief valves (6,7; 8,9) and that at least one selector valve (5) is provided which in the motor mode of the hydrostatic motor switches the pilot controlled pressure relief valve of the pressure side to a higher maximum pressure, and in the pump mode switches the pilot controlled pressure relief valve of the other pressure side to a lower maximum pressure.

2. Circuit according to Claim 1, characterised in that provided for control of the piloted pressure relief valves (6-9) is a servo hydraulic pump (4), the pressure side of which can be connected to one of the pilot controlled pressure relief valves by a directional control valve (5).

3. Circuit according to Claim 2, characterised in that the directional control valve is an electromagnetically actuated four/two valve with additional float position.

4. Circuit according to claims 1 to 3, characterised in that the servo hydraulic pump (4) additionally controls the displacement regulating element (3) for the hydraulic pump (1).

5. Circuit according to one of claims 1 to 4, characterised in that a throttle valve (14, 14') which can be switched to through-flow or throttle mode is provided in each of the pilot control lines of the pilot controlled pressure relief valves (6-9), and that on pressure increase in the pressure line (11-13) the throttle valve switches to throttle mode so that the pressure relief valve protecting the pressure line concerned is switched with a predetermined time delay to the higher pressure level.

6. Circuit according to one of claims 1 to 4, characterised in that arranged in the pilot control lines of the pilot controlled pressure relief valves (6-9) are directional control valves with flow or block positions which are operable by sensors capable of registering the direction of delivery of the hydraulic pump (1), the pressure in the supply and return lines (10-13) of the hydrostatic motor (2), or the direction of rotation of the hydrostatic motor.

## Revendications

1. Circuit hydraulique pour la limitation du couple de rotation d'un moteur hydraulique hydrostatique relié en circuit fermé à une pompe hydraulique, qui fonctionne en freinage comme pompe hydraulique, avec deux soupapes de limitation de pression installées en amont et en aval du moteur hydraulique, caractérisé en ce que les soupapes de limitation de pression sont constituées de soupapes de limitation de pression à précommande (6, 7; 8, 9) et en ce qu'il est prévu au moins une soupape de commutation (5) qui, lorsque le moteur hydraulique (2) fonctionne comme moteur, commute la soupape de limitation de pression à précommande située côté pression à une pression maximale plus élevée et qui, lorsque le moteur fonctionne comme pompe, commute la soupape de limitation de pression à précommande de l'autre côté sous pression à une pression maximale plus basse.

2. Circuit selon la revendication 1, caractérisé en ce que pour la commande des soupapes de limitation de pression à précommande (6-9) est prévue une servopompe hydraulique (4) dont le côté sous pression peut être commuté sur une des soupapes de limitation de pression à précommande par l'intermédiaire d'une soupape d'inversion (5).

3. Circuit selon la revendication 2, caractérisé en ce que la soupape d'inversion est une soupape électromagnétique à quatre ou deux voies, avec une position flottante supplémentaire.

4. Circuit selon l'une des revendications 1 à 3, caractérisé en ce que la servopompe hydraulique (4) commande en plus un élément de réglage (3) pour la pompe hydraulique (1).

5. Circuit selon l'une des revendications 1 à 4, caractérisé en ce qu'une soupape étrangleuse (14, 14') commutable en position de passage libre ou d'étranglement est prévue dans chacune des conduites de précommande des soupapes de limitation de pression (6-9), et en ce qu'en cas d'augmentation de pression dans la conduite sous pression (11-13), la soupape étrangleuse se commute en position d'étranglement, de sorte que la soupape de limitation de pression à précommande associée à chacune des conduites sous pression est commutée sur le niveau de pression le plus élevé avec un retard prédéterminé.

6. Circuit selon l'une des revendications 1 à 4, caractérisé en ce que dans les conduites de précommande des soupapes de limitation de pression (6-9) à précommande sont disposées des soupapes d'inversion à position de passage libre ou de blocage, qui sont commutables par l'intermédiaire de sondes qui détectent le sens d'alimentation de la pompe hydraulique (1), la pression dans les conduites d'alimentation et de retour (10-13) du moteur hydraulique (2) ou le sens de rotation du moteur hydraulique.
